(19) Europäisches Patentamt
European Patent Office
Office européen des brevets

(11) **EP 2 871 252 A1**

(12) **EUROPEAN PATENT APPLICATION**
published in accordance with Art. 153(4) EPC

(43) Date of publication:
**13.05.2015 Bulletin 2015/20**

(21) Application number: **13816689.7**

(22) Date of filing: **29.03.2013**

(51) Int Cl.:
*C22C 38/00* (2006.01)  *B21C 37/08* (2006.01)
*C21D 8/02* (2006.01)  *C22C 38/12* (2006.01)
*C22C 38/50* (2006.01)  *G01N 29/04* (2006.01)

(86) International application number:
**PCT/JP2013/002160**

(87) International publication number:
**WO 2014/010150 (16.01.2014 Gazette 2014/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.07.2012 JP 2012153410**

(71) Applicant: **JFE Steel Corporation**
**Tokyo, 100-0011 (JP)**

(72) Inventors:
• **TANIZAWA, Akihiko**
**Tokyo 100-0011 (JP)**
• **NAKAMICHI, Haruo**
**Tokyo 100-0011 (JP)**
• **KAWANAKA, Toru**
**Tokyo 100-0011 (JP)**
• **UCHITOMI, Noriaki**
**Tokyo 100-0011 (JP)**
• **OZEKI, Takafumi**
**Tokyo 100-0011 (JP)**

(74) Representative: **Grünecker Patent- und Rechtsanwälte**
**PartG mbB**
**Leopoldstraße 4**
**80802 München (DE)**

(54) **THICK-WALLED HIGH-STRENGTH SOUR-RESISTANT LINE PIPE AND METHOD FOR PRODUCING SAME**

(57) A line pipe suitable as a heavy wall, high-strength line pipe for sour gas service having a wall thickness of 20 mm or more and a tensile strength of 560 MPa or more and a production method therefor are provided.

According to this line pipe, the base metal portion contains particular amounts of C, Si, Mn, P, S, Al, Nb, Ca, N, and 0, one or more component selected from Cu, Ni, Cr, Mo, V, and Ti as optional components, and the balance being Fe and unavoidable impurities. The microstructure in the pipe thickness direction contains 90% or more bainite in a region that extends from a position 2 mm from an inner surface to a position 2 mm from an outer surface. In a hardness distribution in the pipe thickness direction, the hardness in a region other than a center segregation area is 220 Hv10 or less and the hardness in the center segregation area is 250 Hv10 or less. The major axes of pores, inclusions, and inclusion clusters that are present in a portion that extends from a position 1 mm from the inner surface to a 3/16 position of the tube thickness and in a portion that extends from a position 1 mm from the outer surface to a 13/16 position of the tube thickness in the tube thickness direction are 1.5 mm or less. A continuous casting slab having the above-described composition is hot-rolled under particular conditions and then subjected to accelerated cooling.

**Description**

Technical Field

The present invention relates to a heavy wall, high-strength line pipe for sour gas service and a production method therefor. In particular, it relates to a pipe having a wall thickness of 20 mm or more and a tensile strength of 560 MPa or more.

Background Art

With the increase in energy demand worldwide, the amounts of crude oil and natural gas being extracted have increased yearly, leading to gradual exhaustion of high-quality crude oil and natural gas. Under such circumstances, there has arisen a need for exploiting low-quality crude oil and natural gas with a high hydrogen sulfide content.

Pipe lines laid to extract such crude oil and natural gas and pressure vessels and piping for crude oil refining plants need to exhibit an excellent sour resistant property (resistance to hydrogen-induced cracking (HIC) and resistance to sulfide stress corrosion cracking (SSC)) to ensure safety. Heavy wall, high-strength steel plates and steel pipes must be used to extend the distance over which the linepipes are laid and to improve transportation efficiency.

Under such circumstances, the challenge has been to stably supply heavy wall, high-strength line pipes for sour gas service that have a strength grade of X60 to X65 in accordance with API (American Petroleum Institute) 5L, and a wall thickness of about 20 to 40 mm and exhibit an excellent sour resistant property under the condition of solution A as specified in NACE-TM0284 and NACE-TM0177.

Currently, it is essential to use, as steel pipe materials, steel plates produced from continuous casting slabs through thermo-mechanical control processes (TMCP) in order to stably supply line pipes for sour gas service. Under such limitations, factors that improve resistance to HIC have been clarified including 1) use of less center segregation elements such as Mn and P, decreasing the casting speed, and decreasing the center segregation hardness by application of soft reduction; 2) suppression of formation of elongated MnS in the center segregation area by decreasing the S and O contents and addition of an optimum amount of Ca, and suppression of formation of Ca clusters in inclusion accumulation zones (in a vertical bending continuous casting machine, the position at about 1/4t from the slab surface side); and 3) formation of a bainite single phase microstructure by optimization of accelerated cooling conditions in TMCP, suppression of formation of martensite-austenite constituent (MA), and suppression of hardening of the center segregation area. In this regard, Patent Literatures 1 to 25 made the following proposals.

Patent Literatures 1 to 3 disclose a technology that achieves excellent resistance to HIC through a rationalized design of chemical composition. This technology introduces chemical composition parameters that quantify the effects of alloying elements found in high concentrations in the center segregation area on the center segregation hardness and chemical composition parameters that quantify formation of MnS in the center segregation area and Ca clusters in the inclusion accumulation zone.

Patent Literatures 4 to 7 disclose a method that includes measuring the Mn, Nb, and Ti concentrations in a center segregation portion and controlling these concentrations to particular levels or lower to achieve excellent resistance to HIC. Patent Literature 8 discloses a method for achieving excellent resistance to HIC, in which, the length of a porosity in the center segregation portion is controlled to a particular value or less to suppress concentration of the alloying elements in the center segregation portion and an increase in hardness caused by the concentration.

Patent Literature 9 discloses a method for achieving excellent resistance to HIC by limiting the upper limit of the size of inclusions bonded to S, N, and O and NbTiCN generated in the center segregation area and controlling the chemical composition and the slab heating conditions to control the size within such a range. Patent Literature 10 discloses a method for achieving excellent resistance to HIC by decreasing the Nb content to less than 0.01% to suppress formation of NbCN that serves as a starting point of HIC in the center segregation area.

Patent Literature 11 discloses a method for achieving both an excellent DWTT property and resistance to HIC for heavy wall, high-strength line pipe, in which the heating temperature during reheating of a slab is controlled to a temperature that allows NbCN in the slab to dissolve and coarsening of austenite grains is suppressed. Patent Literatures 12 and 13 disclose a method for achieving excellent resistance to HIC, in which the Ca-Al-O composition ratio is optimized to optimize the morphology of Ca added to suppress formation of MnS, in other words, to form fine spherical Ca, and HIC that starts from Ca clusters and coarse TiN is thereby suppressed.

Patent Literature 14 discloses a method for achieving excellent resistance to HIC, in which C/Mn and the total reduction amount of un-recrystallized temperature ranges are taken into account in determining the lower limit of the accelerated cooling starting temperature so as to suppress formation of banded microstructures. Patent Literatures 15 and 16 disclose a method for achieving excellent resistance to HIC, in which the rolling finish temperature is increased to suppress deterioration of the microstructure's ability to stop HIC propagation caused by the crystal grains planarized by rolling in the un-recrystallized temperature range.

Patent Literature 17 discloses a method for achieving excellent resistance to HIC by optimizing accelerated cooling and employing online rapid heating so as to make a microstructure in which fine precipitates are dispersed in a ferrite structure and to thereby achieve both a decrease in the surface hardness by promoting formation of ferrite in the surface area and high strength by precipitation strengthening. Patent Literatures 18 to 20 disclose a method for achieving both strength and resistance to HIC similar to the method disclosed in Patent Literature 17 by forming a mainly bainitic microstructure.

Patent Literatures 22 to 25 disclose a method for achieving excellent resistance to HIC, in which rapid heating is conducted by an online induction heater after rapid cooling so as to adjust the microstructure and hardness distribution in the steel plate thickness direction.

Patent Literature 22 describes that the ability to stop propagation of HIC is enhanced by suppressing formation of MA in the microstructure and making the hardness distribution homogeneous in the plate thickness direction. Patent Literature 23 describes that high strength and resistance to HIC are both achieved by adjusting the composition so that segregation is suppressed and precipitation strengthening is possible and by forming a ferrite-bainite dual phase microstructure in which the hardness difference within the microstructure is small.

Patent Literature 24 describes that the composition is adjusted so that the concentrations of respective alloying elements are decreased in the center segregation portion to thereby decrease the hardness in the center segregation portion, to form a steel plate surface portion composed of a metallographic microstructure of bainite or a mixed microstructure of bainite and ferrite, and to adjust the volume fraction of the MA to 2% or less.

Patent Literature 25 discloses a method for achieving excellent resistance to HIC by suppressing hardening of the center segregation portion and decreasing the surface hardness. In this method, the cooling rate in the center of the plate in the thickness direction during accelerated cooling is specified so that at the initial stage of cooling, the plate is cooled to the surface temperature to 500°C or less where the cooling rate is kept low, and then the cooling rate is increased to cool the plate to a finish temperature at which a strength can be achieved.

Citation List

Patent Literature

PTL 1: Japanese Unexamined Patent Application Publication No. 2009-221534

PTL 2: Japanese Unexamined Patent Application Publication No. 2010-77492

PTL 3: Japanese Unexamined Patent Application Publication No. 2009-133005

PTL 4: Japanese Unexamined Patent Application Publication No. 6-220577

PTL 5: Japanese Unexamined Patent Application Publication No. 2003-13175

PTL 6: Japanese Unexamined Patent Application Publication No. 2010-209461

PTL 7: Japanese Unexamined Patent Application Publication No. 2011-63840

PTL 8: Japanese Unexamined Patent Application Publication No. 2010-209460

PTL 9: Japanese Unexamined Patent Application Publication No. 2006-63351

PTL 10: Japanese Unexamined Patent Application Publication No. 2011-1607

PTL 11: Japanese Unexamined Patent Application Publication No. 2010-189722

PTL 12: Japanese Unexamined Patent Application Publication No. 10-8196

PTL 13: Japanese Unexamined Patent Application Publication No. 2009-120899

PTL 14: Japanese Unexamined Patent Application Publication No. 2010-189720

PTL 15: Japanese Unexamined Patent Application Publication No. 9-324216

PTL 16: Japanese Unexamined Patent Application Publication No. 9-324217

PTL 17: Japanese Unexamined Patent Application Publication No. 2003-226922

PTL 18: Japanese Unexamined Patent Application Publication No. 2004-3014

PTL 19: Japanese Unexamined Patent Application Publication No. 2004-3015

PTL 20: Japanese Unexamined Patent Application Publication No. 2005-60820

PTL 21: Japanese Unexamined Patent Application Publication No. 2005-60837

PTL 22: Japanese Unexamined Patent Application Publication No. 2008-56962

PTL 23: Japanese Unexamined Patent Application Publication No. 2008-101242

PTL 24: Japanese Unexamined Patent Application Publication No. 2009-52137

PTL 25: Japanese Unexamined Patent Application Publication No. 2000-160245

Summary of Invention

Technical Problem

Heavy wall, high-strength line pipes for sour gas service are subjected to large strain during cold working such as UOE forming and press bend forming. Moreover, since large amounts of alloying elements are added to ensure strength, the surface hardness tends to increase due to the difference in cooling rate between the surface and the plate center in the thickness direction during accelerated cooling (the thicker the plate, the larger the difference). Accordingly, occurrence of HIC near the surface has especially been a problem.

However, Patent Literatures 1 to 21 make no mention of ways to resolve HIC that occurs in the surface of a heavy wall, high-strength line pipe for sour gas service. Patent Literatures 22 to 25 aim to prevent HIC that occurs from near the surface hardened by accelerated cooling and the like. But no investigations were made as to the influence of presence of inclusions near the surface. The inclusions are involved in occurrence of HIC in the center segregation portion. And thus the technologies disclosed in these literatures may be insufficient for suppressing HIC that occurs near the surface.

Moreover, heavy wall, high-strength line pipes for sour gas service are nowadays produced of low-O, ultralow-S steel. However, the influence of using such steel on HIC has not been fully investigated.

An object of the present invention is to provide a heavy wall, high-strength line pipe for sour gas service, the pipe having a thickness of 20 mm or more, excellent resistance to HIC, and an ability to prevent HIC that occurs near the surface.

Solution to Problem

In order to acquire knowledge as to the resistance to HIC of heavy wall, high-strength line pipes for sour gas service produced from low-0 and ultralow-S steel, the inventors of the present invention have studied HIC that occurs at various positions in a wall thickness direction of welded steel pipes having a wall thickness of 20 mm or more and a homogeneous bainite microstructure. The inventors have made the following findings.

1. Even for heavy wall welded steel pipes having a wall thickness of 20 mm or more, it is effective to adjust the center segregation area hardness to 250 Hv10 or less and suppress formation of MnS in order to suppress HIC that occurs in the center segregation area.

2. Occurrence of MnS is highly correlated with ACRM expressed by the equation below and adjusting ACRM to 1.0 or more can suppress formation of MnS in the center segregation area:

$$ACRM = (Ca - (1.23O - 0.000365))/(1.25S)$$

where Ca, O, and S respectively represent the Ca content, the O content, and S content in terms of % by mass.

3. HIC occurring in the inclusion accumulation zone generated by a vertical bend continuous casting machine can be suppressed by adjusting ACRM to 4.0 or less since formation of Ca clusters can be suppressed.

4. Occurrence of the HIC near the surface cannot be explained by the surface hardness only and the conditions of pores and inclusions that occur near the surface have a large influence.

5. Investigations on the fracture surfaces of HIC occurring near the surface reveal that the starting points of HIC are pores and CaO clusters that have a major axis 200 $\mu$m or longer. HIC occurs from these pores and inclusions once the hardness near the surface exceeds 220 Hv10. HIC also occurs when the major axis of the pores and inclusions exceeds 1.5 mm despite that the hardness near the surface is 220 Hv10 or less.

6. In sum, in order to suppress HIC near the surface, either of the following should be applied: a) occurrence of pores and inclusions having a major axis 200 $\mu$m or longer must be suppressed near the surface; or b) the hardness near the surface must be adjusted to 220 Hv10 or less while suppressing occurrence of pores and inclusions having a major axis of 1.5 mm or longer near the surface.

7. It is possible to achieve a) by not allowing pores and coarse clusters to remain in steel during the steel making process. However, in order not to allow the coarse clusters (inclusions) to remain in the steel, pores must be intentionally left to accelerate floatation of the inclusions. This requires a fine control of steel making process in a balanced manner and it is highly probable that sufficient production stability cannot be achieved.

Moreover, in order to assuredly capture pores near the surface and inclusions having a major axis 200 $\mu$m or longer, a highly sensitive inspection method must be employed. However, this is not practical.

8. In the case of b), it is possible to suppress occurrence of HIC if the surface hardness can be decreased during the process of producing the steel plate to decrease the hardness near the surface to 220 Hv10 or less after pipe forming. It is relatively easy to detect pores and inclusions 1.5 mm or larger.

9. The surface hardness of a welded steel pipe can be adjusted to 220 Hv10 or less without conducting further processes after accelerated cooling if the cooling rate of a steel plate from 700°C to 600°C at a position 1 mm from the surface of the welded steel pipe (a position 1 mm below the surface) can be controlled to 120 °C/s or less provided that the pipe has a T (pipe thickness)/D (pipe diameter) ratio of 0.02 or more.

HIC under the surface becomes a problem only for heavy wall materials and this problem does not occur in pipes having a wall thickness less than 20 mm. Thus, pipes having a wall thickness of 20 mm or more and particularly 25 mm or more are the subject of the present invention.

The larger the wall thickness and the smaller the outer diameter, the larger the strain imposed during pipe-forming and more likely the occurrence HIC near the surface. At a T/D exceeding 0.045, HIC near the surface cannot be prevented because of the increase in hardness and deterioration of resistance to HIC due to strains near the surface. Thus, steel pipes having a T/D of 0.045 or less are the subject of the present invention.

The present invention has been made based on the findings above and further investigations. In other words, the present invention provides the following:

(1) A heavy wall, high-strength line pipe for sour gas service, in which a chemical composition of a steel pipe base metal portion contains, in terms of % by mass, C: 0.020 to 0.060%, Si: 0.50% or less, Mn: 0.80 to 1.50%, P: 0.008% or less, S: 0.0015% or less, Al: 0.080% or less, Nb: 0.005 to 0.050%, Ca: 0.0010 to 0.0040%, N: 0.0080% or less, O: 0.0030% or less, and the balance being Fe and unavoidable impurities, Ceq expressed by equation (1) is 0.320 or more, PHIC expressed by equation (2) is 0.960 or less, ACRM expressed by equation (3) is 1.00 to 4.00, and PCA expressed by equation (4) is 4.00 or less; a microstructure in a pipe thickness direction contains 90% or more bainite in a region that extends from a position 2 mm from an inner surface to a position 2 mm from an outer surface; in a hardness distribution in the pipe thickness direction, a hardness of a region other than a center segregation area is 220 Hv10 or less and a hardness of the center segregation area is 250 Hv10 or less; and major axes of pores, inclusions, and inclusion clusters that are present in a portion that extends from a position 1 mm from the inner surface to a 3/16 position of a pipe thickness(T) and in a portion that extends from a position 1 mm from the outer surface to a 13/16 position of the pipe thickness(T) in the pipe thickness direction are 1.5 mm or less:

$$Ceq = C + Mn/6 + (Cu + Ni)/15 + (Cr + Mo + V)/5 \cdots equation (1)$$

$$PHIC = 4.46C + 2.37Mn/6 + (1.74Cu + 1.7Ni)/5 + (1.18Cr + 1.95Mo + 1.74V)/15 + 22.36P \quad \cdots \text{equation (2)}$$

$$ACRM = (Ca - (1.23O - 0.000365))/(1.25S) \quad \cdots \text{equation (3)}$$

$$PCA = 10000CaS^{0.28} \quad \cdots \text{equation (4)}$$

where respective alloying elements in equations (1) to (4) represent their contents (% by mass) in the chemical composition.

(2) The heavy wall, high-strength line pipe for sour gas service according to (1), in which the chemical composition of the steel pipe base metal portion further contains, in terms of % by mass, at least one selected from Cu: 0.50% or less, Ni: 1.00% or less, Cr: 0.50% or less, Mo: 0.50% or less, V: 0.100% or less, and Ti: 0.030% or less.

(3) The heavy wall, high-strength line pipe for sour gas service according to (1) or (2), in which the pipe thickness is 20 mm or more and T/D is 0.045 or less (T representing the pipe thickness (mm) and D representing a pipe diameter (mm)).

(4) A method for producing a heavy wall, high-strength line pipe for sour gas service, the method including reheating a continuous cast slab having the chemical composition according to (1) or (2) to 1000 to 1150°C; hot-rolling the reheated slab at a total reduction ratio of 40 to 90% in an un-recrystallized temperature range; conducting accelerated cooling from a surface temperature of Ar3 - t °C or more (where t represents a plate thickness (mm)) to a temperature in the range of 350 to 550°C, in which cooling from 700 to 600°C is conducted at an average cooling rate of 120 °C/s or less in a portion that extends from a position 1 mm from a front surface to a 3/16 position of the plate thickness and in a portion that extends from a position 1 mm from a rear surface to a 13/16 position of the plate thickness in a plate thickness direction and at a cooling rate of 20 °C/s or more at a center in the plate thickness direction; conducting cold working to bend the resulting plate into a pipe; and welding butted portions of two edges to form a welded steel pipe.

(5) The method for producing a heavy wall, high-strength line pipe for sour gas service according to (4), in which after the hot rolling, descaling is conducted at an injection pressure of 1 MPa or more at a steel plate surface immediately before the accelerated cooling.

(6) The method for producing a heavy wall, high-strength line pipe for sour gas service according to (4) or (5), in which a pipe thickness is 20 mm or more and T/D is 0.045 or less (T representing the pipe thickness (mm) and D representing a pipe diameter (mm)).

(7) A method for judging resistance to HIC of a heavy wall, high-strength line pipe for sour gas service, in which, after a welded steel pipe is produced by the method according to any one of (4) to (6), samples are cut out from a base metal of the steel pipe and ultrasonic flaw detection is conducted with a 20 MHz or higher probe in a portion that extends from a position 1 mm from an inner surface to a 3/16 position of the pipe thickness and in a portion that extends from a position 1 mm from an outer surface to a 13/16 position of the pipe thickness in a pipe thickness direction, the ultrasonic flaw detection being conducted over a region having an area of at least 200 mm$^2$ in a pipe circumferential direction and a pipe longitudinal direction to detect whether or not there is a reading value that indicates 1.5 mm or more.

Advantageous Effects of Invention

The present invention has high industrial applicability since a heavy wall, high-strength line pipe for sour gas service having a wall thickness of 20 mm or more and excellent resistance to HIC at various positions in the pipe thickness direction can be provided as well as a production method therefor.

Description of Embodiments

The chemical composition, microstructure, and hardness distribution of a steel pipe base metal portion of a heavy wall, high-strength line pipe for sour gas service according to the present invention will now be described.
[Chemical composition] In the description below, "%" means percent by mass.

C: 0.020 to 0.060%

Carbon (C) is found in high concentrations in the center segregation area and accelerates segregation of other elements in the center segregation area. From the viewpoint of achieving resistance to HIC, the C content is thus preferably low and is thus limited to 0.060% or less. Since C is an element that is low-cost and effective for increasing the strength, the C content is 0.020% or more and preferably 0.025 to 0.055% for the base metal to achieve sufficient strength.

Si: 0.50% or less

Silicon (Si) is an element used for deoxidation and is contained since it decreases the amounts of inclusions and contributes to increasing the strength. At a Si content exceeding 0.50%, the HAZ toughness is significantly deteriorated and so is weldability. Thus, the upper limit of the Si content is 0.50%. The Si content is preferably 0.40% or less and more preferably in the range of 0.05 to 0.40%.

Mn: 0.80 to 1.50%

Manganese (Mn) is found in particularly high concentrations in the center segregation area and increases the hardness of the center segregation area. Thus, the Mn content is preferably low in order to achieve the resistance to HIC. Since the hardness of the center segregation area becomes high and the resistance to HIC cannot be achieved despite adjustment of other alloying elements at a Mn content exceeding 1.50%, the upper limit is set to 1.50%. Meanwhile, Mn is low-cost, contributes to increasing the strength, and suppresses formation of ferrite during cooling. In order to achieve these effects, 0.80% or more of Mn must be added. The Mn content is more preferably 1.00 to 1.50%.

P: 0.008% or less

Phosphorus (P) is found in particularly high concentrations in the center segregation area and significantly increases the hardness in the center segregation area. Accordingly, the P content is preferably as low as possible. However, decreasing the P content increases the steel making cost and thus up to 0.008% of P is allowed. More preferably, the P content is 0.006% or less.

S: 0.0015% or less

Sulfur (S) is found in particularly high concentrations in the center segregation area, forms MnS in the center segregation area, and significantly deteriorates the resistance to HIC. Thus, the S content is preferably as low as possible. Since decreasing the S content increases the steel production cost, up to 0.0015% of S is allowed. More preferably, the S content is 0.0008% or less.

Al: 0.080% or less

Aluminum (Al) is an essential element for decreasing the amounts of inclusions by deoxidation. However, at an Al content exceeding 0.08%, problems such as deterioration of HAZ toughness, degradation of weldability, and alumina clogging of submerged entry nozzles during continuous casting occur. Thus, the upper limit is 0.08%. The Al content is more preferably 0.05% or less.

Nb: 0.005 to 0.050%

Niobium (Nb), if it exists as solute Nb, expands the un-recrystallized temperature range during controlled rolling and contributes to maintaining the toughness of the base metal. In order to achieve such effects, at least 0.005% of Nb must be added. On the other hand, Nb is found in high concentrations in the center segregation area and precipitates as coarse NbCN or NbTiCN during solidification, thereby serving as starting points of HIC and deteriorating the resistance to HIC. Thus, the upper limit of the Nb content is 0.05%. The Nb content is more preferably 0.010 to 0.040%.

Ca: 0.0010 to 0.0040%

Calcium (Ca) suppresses formation of MnS in the center segregation area and enhances the resistance to HIC. In order to achieve such effects, at least 0.0010% or Ca is needed. When Ca is added excessively, CaO clusters are generated near the surface or in the inclusion accumulation zone and the resistance to HIC is deteriorated. Accordingly, the upper limit is 0.0040%.

N: 0.0080% or less

Nitrogen (N) is an unavoidable impurity element but does not degrade base metal toughness or resistance to HIC as long as the N content is 0.0080% or less. Thus, the upper limit is 0.0080%.

O: 0.0030% or less

Oxygen (O) is an unavoidable impurity element and degrades the resistance to HIC under the surface or in the inclusion accumulation, resulting from the increase in the amounts of $Al_2O_3$ and CaO. Thus, the O content is preferably low. However, decreasing the O content increases the steel making cost. Thus, up to 0.0030% of O is allowed. The O content is more preferably 0.0020% or less.

Ceq (%): 0.320 or more

Carbon equivalent (Ceq) (%) is an indicator of the amount of an alloying element needed to ensure the strength of the base metal of a heavy wall, high-strength line pipe for sour gas service and is set to 0.320 or more. The upper limit is not particularly specified but is preferably 0.400 or less from the viewpoint of weldability. Ceq (%) is determined by the following equation:

$$\text{Ceq (\%)} = C + Mn/6 + (Cu + Ni)/15 + (Cr + Mo + V)/5$$

where respective alloying elements represent contents (% by mass) in the chemical composition.

PHIC (%): 0.960 or less

PHIC (%) is a parameter of the degree of hardness of the center segregation area. As the PHIC value increases, the hardness of the center segregation area increases and occurrence of HIC at the center in the pipe thickness direction is accelerated. As long as PHIC (%) is 0.960 or less, the hardness of the center segregation area can be adjusted to 250 Hv10 or less and excellent resistance to HIC can be maintained. Thus, the upper limit is 0.960. PHIC is more preferably 0.940 or less. PHIC (%) is determined by the following equation:

$$\text{PHIC (\%)} = 4.46C + 2.37Mn/6 + (1.74Cu + 1.7Ni)/5 + (1.18Cr + 1.95Mo + 1.74V)/15 + 22.36P$$

where respective alloying elements represent contents (% by mass) in the chemical composition.

ACRM (%): 1.00 to 4.00

ACRM (%) is an indicator for quantifying the effect of Ca on controlling the morphology of MnS. At an ACRM (%) of 1.00 or more, formation of MnS in the center segregation area is suppressed and occurrence of HIC in the center in the pipe thickness direction is suppressed. At an ACRM (%) exceeding 4.00, CaO clusters are easily generated and HIC easily occurs. Thus, the upper limit is 4.00. ACRM (%) is more preferably 1.00 to 3.50. ACRM (%) is determined by the following equation:

$$\text{ACRM (\%)} = (Ca - (1.23O - 0.000365))/(1.25S)$$

where respective alloying elements represent contents (% by mass) in the chemical composition.

PCA (%) : 4.00 or less

PCA (%) is an indicator of a limit for CaO cluster formation by Ca. At PCA (%) exceeding 4.00, CaO clusters are easily generated and HIC is likely to occur near the surface and in the inclusion accumulation zone. Thus, the upper limit is set to 4.00. PCA (%) is determined by the following equation:

$$\text{PCA (\%)} = 10000 \text{CaS}^{0.28}$$

where respective alloying elements represent contents (% by mass) in the chemical composition.

The above-described elements are the basic composition elements of the heavy wall, high-strength line pipe for sour gas service according to the present invention and the balance is Fe and unavoidable impurities. In the present invention, the line pipe may contain at least one of the following alloying elements from the viewpoint of improving the strength of the base metal and HAZ toughness.

Cu: 0.50% or less

Copper (Cu) contributes to increasing the strength of the base metal but also is an element found in high concentrations in the center segregation area. Thus, excessive incorporation of Cu should be avoided. At a Cu content exceeding 0.50%, weldability and HAZ toughness are degraded. Thus, when Cu is to be contained, the upper limit of the Cu content is 0.50%.

Ni: 1.00% or less

Nickel (Ni) contributes to increasing the strength of the base metal but also is an element found in high concentrations in the center segregation area. Thus, excessive incorporation of Ni should be avoided. At a Ni content exceeding 1.00%, weldability is degraded and Ni is a costly element. Thus, when Ni is to be contained, the upper limit of the Ni content is 1.00%.

Cr: 0.50% or less

Chromium (Cr) contributes to increasing the strength of the base metal but is also an element found in high concentrations in the center segregation area. Thus, excessive incorporation of Cr should be avoided. At a Cr content exceeding 0.50%, weldability and HAZ toughness are degraded. Thus, when Cr is to be contained, the upper limit of the Cr content is 0.50%.

Mo: 0.50% or less

Molybdenum (Mo) contributes to increasing the strength of the base metal but is also an element found in high concentrations in the center segregation area. Thus, excessive incorporation of Mo should be avoided. At a Mo content exceeding 0.50%, weldability and HAZ toughness are degraded. Thus, when Mo is to be contained, the upper limit of the Mo content is 0.50%.

V: 0.100% or less

Vanadium (V) contributes to increasing the strength of the base metal but is also an element found in high concentrations in the center segregation area. Thus, excessive incorporation of V should be avoided. At a V content exceeding 0.100%, weldability and HAZ toughness are degraded. Thus, when V is to be contained, the upper limit of the V content is 0.100%.

Ti: 0.030% or less

Titanium (Ti) forms TiN and thereby decreases the amount of dissolved N, suppresses degradation of the base metal toughness, and improves HAZ toughness. However, excessive incorporation of Ti promotes formation of NbTiCN in the center segregation area and deteriorates HIC. When Ti is to be contained, the upper limit of the Ti content is 0.030%.

[Microstructure]

As for the microstructure of a base metal portion of a steel pipe, at least the microstructure in a portion that extends from a position 2 mm from the inner surface to a position 2 mm from the outer surface in the pipe thickness direction is adjusted to contain 90% or more bainite. The inner surface is the surface on the inner side of the steel pipe and the outer surface is the surface on the outer side of the steel pipe.

The microstructure of the base metal portion of the steel pipe is preferably a single phase structure to prevent HIC and is preferably a bainite singe-phase microstructure since a bainite structure is needed to obtain a strength desirable for heavy wall, high-strength line pipes for sour gas service.

The bainite structure fraction (area fraction) is preferably 100%. However, incorporation of less than 10% of at least one selected from ferrite, cementite, and MA does not affect prevention of HIC. Thus, the bainite structure fraction (area fraction) is set to 90% or more and more preferably 95% or more.

[Hardness distribution]

In a hardness distribution in the pipe thickness direction, the hardness of a region other than the center segregation area is 220 Hv10 or less and the hardness of the center segregation area is 250 Hv10 or less

In a heavy wall, high-strength line pipe, HIC near the surface poses a problem and thus the hardness of the surface is preferably low. As long as the maximum length of inclusions and pores near the surface is 1.5 mm or less, occurrence of HIC near the surface can be suppressed by adjusting the hardness of the portion near the surface to 220 Hv10 or less and more preferably to 210 Hv10 or less.

Occurrence of HIC in the center segregation area can be suppressed in the steel having the above-described composition if the hardness of the center segregation area is 250 Hv10 or less. Thus, the upper limit is set to 250 Hv10.

[Pores and inclusions near the surface]

Major axes of pores, inclusions, and inclusion clusters present in a portion that extends from a position 1 mm from the inner surface to a 3/16 position of the pipe thickness (T) and in a portion that extends from a position 1 mm from the outer surface to a 13/16 position of the pipe thickness (T) in the thickness direction are 1.5 mm or less.

HIC near the surface occurs when one or more selected from pores, inclusions, and inclusion clusters (CaO clusters) are present. When the hardness near the surface is decreased to 220 Hv10 or less and more preferably 210 Hv10 or less and also when the size of CaO clusters and pores is 1.5 mm or less in terms of major axis, the resistance to HIC is not degraded. The inclusions may be measured by any method such as microscopic observation of a section taken near the surface or a nondestructive inspection. However, since measurement needs to be conducted on a subject having a large volume, a nondestructive inspection such as ultrasonic flaw detection is preferred.

In conducting ultrasonic flaw detection, a sample is cut out from the base metal portion of the steel pipe and measurement is conducted in the same portions of the sample as the portions where HIC occurs near the surface (a portion that extends from a position 1 mm from the inner surface to a 3/16 position of the pipe thickness (T) and in a portion that extends from a position 1 mm from the outer surface in the thickness direction to a 13/16 position of the pipe thickness(T) in the thickness direction). The measurement is conducted with a 20 MHz or higher probe over a region having an area of at least 200 mm$^2$ in the pipe circumferential direction and the pipe longitudinal direction to confirm that there is no reading value that indicates 1.5 mm or larger.

It is necessary to use a 20 MHz or higher probe to detect inclusions 1.5 mm or larger in size. A dummy material having the same thickness as the sample and being cut out from a base metal of a steel pipe in which 1.5 mm pores are formed is subjected to flaw detection in advance. Then the sample cut out from the base metal of the steel pipe is subjected to flaw detection. If the reflection echo of the sample is higher than the echo detected from the dummy material, the sample is judged as containing inclusions 1.5 mm or larger in size.

[Method for producing a base metal of a steel pipe]

A preferable method for producing a heavy wall, high-strength line pipe for sour gas service according to the present invention will now be described.

Slab heating temperature: 1000 to 1150°C

The strength increases at a high slab heating temperature but the toughness is degraded. Thus, the slab heating temperature must be set within an optimum range in accordance with the desired strength and toughness. At a slab heating temperature lower than 1000°C, the solute Nb cannot be obtained and both the strength and toughness of the base metal are degraded. Thus, the lower limit is 1000°C. At a slab heating temperature exceeding 1150°C, coarse NbCN generated in the center segregation area aggregates further and coarsens, deteriorating occurrence of HIC. Thus, the upper limit is 1150°C.

Total reduction ratio in un-recrystallized temperature range: 40 to 90%

Rolling in the un-recrystallized temperature range has effects of planarizing the microstructure and improving the toughness of the base metal. In order to achieve these effects, a reduction ratio of 40% or more is needed and thus the lower limit is set to 40%. At a reduction ratio over 90%, the effect of improving the toughness of the base metal is already saturated and thus is not large and the ability to stop propagation of HIC is degraded. Thus, the upper limit is 90%. The total reduction ratio is more preferably in the range of 60 to 85%.

Accelerated cooling starting temperature: Ar3 - t °C or more (where t is the plate thickness (mm)) in terms of a surface temperature of the steel plate

In order to form a homogeneous bainite microstructure, the accelerated cooling starting temperature is Ar3 - t °C or more (where t is the plate thickness (mm)) and more preferably Ar3 - t/2 °C or more (where t is the plate thickness (mm)).

Accelerated cooling stopping temperature: 350 to 550°C in terms of the surface temperature of the steel plate

The lower the accelerated cooling stopping temperature, the higher the strength. However, at a cooling stopping temperature less than 350°C, formation of interlath MA in bainite occurs. Moreover, the center segregation area undergoes martensite transformation and this induces HIC. At a cooling stopping temperature exceeding 550°C, part of untransformed austenite transforms to MA and induces HIC. Thus, the upper limit is 550°C.

Average cooling rate of accelerated cooling: 120 °C/s or less near the surface and 20 °C/s or more at the center of the plate in the thickness direction

When the cooling rate of the accelerated cooling near the surface is high, the surface hardness increases and HIC easily occurs. In order to adjust the surface hardness to 220 Hv10 or lower after pipe forming, the cooling rate near the surface needs to be 120 °C/s or less. Thus, the upper limit is 120 °C/s. Here, near the surface refers to a portion that extends from a position 1 mm from the inner surface to a 3/16 position of the plate thickness (t) and a portion that extends from a position 1 mm from the outer surface to a 13/16 position of the plate thickness (t) in the thickness direction.
The higher the cooling rate at the center in the thickness direction, the higher the strength of the base metal. The cooling rate at the center in the thickness direction is set to 20 °C/s or more in order to obtain a desired strength for a heavy wall material.
The cooling rate in portions near the surface sometimes locally increases if thick scale remains on the surface. In order to stably decrease the surface hardness, scales are preferably removed through descaling of jetting a stream at an impact pressure of 1 MPa or more immediately before accelerated cooling. As long as the above-mentioned composition and the production method are satisfied, it is possible to satisfy the strength and DWTT properties required for the line pipe material and to achieve excellent resistance to HIC.

EXAMPLES

Steels having chemical compositions shown in Table 1 were formed into slabs by a continuous casting process. The slabs were reheated, hot-rolled, and subjected to accelerated cooling under conditions shown in Table 2, and then air cooled. The steel plates obtained were formed into welded steel pipes by UOE forming (compression ratio in O-pressing: 0.25%, pipe expanding ratio = 0.95%). The cooling rate at the center of the plate in the thickness direction during accelerated cooling was determined by heat conduction calculation from the temperature of the plate surface.
The bainite fraction in the microstructure of the base metal of each steel pipe was measured by preparing nitaletched samples taken at a position 2 mm from the inner surface, at a position 2 mm from the outer surface, and at the center in the pipe thickness direction and observing the samples with an optical microscope. The lowest value among the bainite fractions observed at the three positions was employed.
The hardness in portions other than the center segregation area of the steel pipe was measured with a Vickers hardness tester under a load of 10 kg. The measurement was carried out at 1 mm intervals from a position 1 mm from the inner surface to a position 1 mm from the outer surface and the maximum value was employed. The hardness of the center segregation area was measured with a micro Vickers hardness tester under a load of 50 g. The measurement was taken at 20 points in the center segregation area and the maximum value was employed.
Pores and inclusions near the surface were measured by C scanning (with a 25 MHz probe). In the measurement, five rectangular samples 10 mm in thickness, 100 mm in the longitudinal direction, and 20 mm in the pipe circumferential direction were cut out from the inner surface of the steel pipe and set in a detector with the inner surface side facing down. Then flaw detection was conducted by setting a flaw detection gate in a portion that extends from a position 1 mm from the inner surface to the 3/16T position. A dummy material having pores 1.5 mm in diameter and the same thickness as these samples was subjected to flaw detection to determine conditions and under which the reading value from these pores is 100% in sensitivity. Under the same conditions, the samples were tested and judged as having inclusions or pores 1.5 mm or larger in size if the reading value exceeded 100%.

The strength of the steel pipe was evaluated from API full thickness tensile test pieces taken in the pipe circumferential direction and the steel pipes that exhibited a tensile strength 560 MPa or higher were rated as acceptable. A drop weight tear test (DWTT) was performed on two pipes each at 0°C and the steel pipes that had an average percent shear area of 85% or higher were rated as acceptable. A HIC test was performed with a NACE TM0284-2003 A solution on three pipes each. Steel pipes having a maximum value of 10% or less in CLR evaluation were rated as acceptable (excellent resistance to HIC).

Results of the observation of the microstructures of the welded steel pipes obtained, the results of ultrasonic flaw detection, and the results of material testing are shown in Table 3. The welded steel pipes within the range of the present invention were all confirmed to exhibit strength and DWTT properties required for line pipes and excellent resistance to HIC. Of the welded steel pipes with the chemical composition and/or process conditions outside the range of the present invention, those having a bainite fraction of the microstructure or the hardness distribution outside the range of the present invention were inferior to the examples within the range of the present invention in terms of CLR evaluation in HIC testing.

The steel pipes (steel pipes Nos. 11, 12, and 14) having a bainite fraction of the microstructure and a hardness distribution within the range of the present invention but produced under the conditions outside the scope of the present invention exhibited inferior tensile strength or DWTT properties although CLR evaluation in HIC testing was comparable to Examples of the present invention.

[Table 1]

Table 1　(mass%)

| Steel type | C | Si | Mn | P | S | Al | Cu | Ni | Cr | Mo | Nb | V | Ti | Ca | N | O | Ceq | PHIC | ACRM | PCA |
|---|---|---|---|---|---|---|---|---|---|---|---|---|---|---|---|---|---|---|---|---|
| A | 0.043 | 0.30 | 1.00 | 0.007 | 0.0004 | 0.026 | | 0.35 | 0.30 | 0.18 | 0.030 | 0.045 | 0.010 | 0.0032 | 0.0035 | 0.0016 | 0.338 | 0.940 | 3.19 | 3.58 |
| B | 0.051 | 0.30 | 1.41 | 0.003 | 0.0003 | 0.030 | | | | 0.22 | 0.041 | | | 0.0013 | 0.0020 | 0.0009 | 0.330 | 0.937 | 1.49 | 1.34 |
| C | 0.028 | 0.40 | 1.30 | 0.003 | 0.0010 | 0.028 | 0.30 | 0.25 | | 0.20 | 0.030 | | 0.012 | 0.0026 | 0.0020 | 0.0010 | 0.321 | 0.847 | 1.39 | 3.76 |
| D | 0.045 | 0.08 | 1.32 | 0.003 | 0.0004 | 0.035 | 0.45 | 0.55 | 0.20 | | 0.009 | | 0.015 | 0.0025 | 0.0045 | 0.0015 | 0.372 | 0.951 | 2.04 | 2.80 |
| E | _0.062_ | 0.20 | 1.25 | 0.003 | 0.0003 | 0.020 | | 0.20 | 0.15 | 0.18 | 0.028 | | 0.010 | 0.0025 | 0.0032 | 0.0015 | 0.350 | _0.966_ | 2.72 | 2.58 |
| F | 0.035 | 0.30 | _1.55_ | 0.004 | 0.0004 | 0.023 | 0.20 | 0.18 | | 0.15 | 0.032 | 0.045 | 0.013 | 0.0026 | 0.0035 | 0.0016 | 0.358 | _0.976_ | 1.99 | 2.91 |
| G | 0.038 | 0.30 | 1.15 | 0.005 | 0.0005 | 0.024 | | | 0.25 | 0.22 | 0.035 | 0.030 | 0.008 | 0.0020 | 0.0030 | 0.0017 | 0.330 | 0.891 | _0.44_ | 2.38 |
| H | 0.042 | 0.28 | 1.25 | 0.004 | 0.0008 | 0.032 | 0.31 | 0.30 | 0.30 | | 0.033 | | 0.012 | 0.0036 | 0.0035 | 0.0015 | 0.351 | 0.911 | 2.12 | _4.89_ |

Note 1: Underlines indicate that the values are outside the scope of the present invention.

Note 2: Ceq (%) = C + Mn/6 + (Cu + Ni)/15 + (Cr + Mo + V)/5 equation (1) PHIC (%) = 4.46C + 2.37Mn/6 + (1.74Cu + 1.7Ni)/5 + (1.18Cr + 1.95Mo + 1.74V)/15 + 22.36P equation (2) ACRM (%) = (Ca - (1.230 - 0.000365))/(1.25S) equation (3) PCA (%) = $10000CaS^{0.28}$ equation (4).

In equations (1) to (4), the respective alloying elements represent contents (mass%) in the chemical composition.

[Table 2] Table 2

Table 2

| Steel pipe | Steel type | Pipe thickness T (mm) | Pipe outer diameter D (mm) | T/D | Slab heating (°C) | Reduction ratio in un-recrystallized temperature range (%) | FT (°C) | Injection pressure of descaling (MPa) | Cooling start (°C) | Cooling rate near surface (°C/s) | Cooling rate at center in the thickness direction (°C/s) | Cooling stop (°C) |
|---|---|---|---|---|---|---|---|---|---|---|---|---|
| 1 | A | 31.8 | 914 | 0.035 | 1100 | 70 | 820 | | 780 | 100 | 30 | 430 |
| 2 | A | 31.8 | 914 | 0.035 | 1100 | 85 | 820 | 1.5 | 780 | 80 | 38 | 450 |
| 3 | B | 38.0 | 1219 | 0.031 | 1110 | 80 | 840 | | 800 | 95 | 28 | 420 |
| 4 | C | 27.7 | 813 | 0.034 | 1030 | 50 | 830 | | 780 | 100 | 34 | 380 |
| 5 | D | 24.0 | 914 | 0.026 | 1020 | 70 | 860 | 1.5 | 800 | 95 | 45 | 520 |
| 6 | D | 24.0 | 914 | 0.026 | 1050 | 70 | 800 | | 740 | 110 | 38 | 480 |
| 7 | A | 31.8 | 914 | 0.035 | 1090 | 70 | 820 | | 780 | 220 | 40 | 450 |
| 8 | A | 31.8 | 610 | 0.052 | 1100 | 70 | 820 | | 780 | 100 | 30 | 430 |
| 9 | A | 31.8 | 914 | 0.035 | 1050 | 70 | 840 | | 800 | 100 | 30 | 320 |
| 10 | B | 24.0 | 914 | 0.026 | 1110 | 70 | 860 | 1.5 | 800 | 90 | 38 | 580 |
| 11 | B | 38.0 | 1219 | 0.031 | 1050 | 25 | 840 | 1.5 | 850 | 110 | 32 | 420 |
| 12 | B | 38.0 | 1219 | 0.031 | 1110 | 80 | 840 | 1.5 | 800 | 40 | 12 | 380 |
| 13 | C | 27.7 | 813 | 0.034 | 1060 | 50 | 850 | | 800 | 160 | 38 | 450 |
| 14 | C | 27.7 | 813 | 0.034 | 1200 | 80 | 830 | | 780 | 100 | 34 | 450 |
| 15 | D | 24.0 | 914 | 0.026 | 1110 | 70 | 770 | | 720 | 110 | 37 | 450 |
| 16 | E | 36.9 | 914 | 0.040 | 1080 | 70 | 840 | | 800 | 95 | 30 | 430 |
| 17 | F | 36.9 | 914 | 0.040 | 1080 | 70 | 840 | | 800 | 95 | 29 | 430 |
| 18 | G | 29.9 | 1219 | 0.025 | 1100 | 70 | 810 | | 760 | 100 | 31 | 450 |
| 19 | H | 31.8 | 914 | 0.035 | 1070 | 70 | 850 | 1.5 | 800 | 80 | 35 | 420 |

Note 1: Underlines indiate that the figures are outside the scope of the present invention.
Note 2: T represents pipe thickness (mm) and D represents pipe outer diameter (mm).

15

[Table 3]

Table 3

| Steel pipe | Steel type | Bainite fraction in microstructure (%) | Maximum hardness in regions other than center segregation area (HV10) | Maximum hardness in center segregation area (HV10) | Maximum reading value in ultrasonic detection provided that detection of 1.5 mm pores was assumed to be 100% (%) | Tensile strength (Mpa) | 0°C DWTT (%) | HIC CLR (%) |
|---|---|---|---|---|---|---|---|---|
| 1 | A | 100 | 212 | 215 | 90 | 570 | 100 | 4.0 |
| 2 | A | 100 | 210 | 220 | 85 | 585 | 100 | 3.9 |
| 3 | B | 100 | 208 | 216 | 20 | 580 | 100 | 2.5 |
| 4 | C | 100 | 210 | 205 | 30 | 590 | 100 | 2.0 |
| 5 | D | 100 | 215 | 240 | 40 | 605 | 100 | 0.0 |
| 6 | D | 90 | 205 | 235 | 40 | 585 | 100 | 3.3 |
| 7 | A | 100 | <u>235</u> | 230 | 90 | 590 | 100 | <u>13.5</u> |
| 8 | A | 100 | <u>225</u> | 212 | 90 | 572 | 100 | <u>11.0</u> |
| 9 | A | 100 | <u>225</u> | 240 | 90 | 590 | 100 | <u>12.9</u> |
| <u>10</u> | B | 100 | 198 | <u>265</u> | 20 | 565 | 100 | <u>15.9</u> |
| 11 | B | 100 | 215 | 220 | 20 | 605 | <u>10</u> | 0.0 |
| <u>12</u> | B | 100 | 180 | 205 | 20 | <u>545</u> | 100 | 0.0 |
| 13 | C | 100 | <u>230</u> | 205 | 30 | 600 | 100 | <u>12.5</u> |
| <u>14</u> | C | 100 | 212 | 210 | 30 | 605 | 5 | 2.5 |
| 15 | D | <u>60</u> | 195 | 230 | 40 | 565 | 100 | <u>17.5</u> |
| <u>16</u> | E | 100 | 210 | <u>280</u> | 45 | 585 | 100 | <u>12.5</u> |
| <u>17</u> | F | 100 | 210 | <u>275</u> | 50 | 580 | 100 | <u>16.5</u> |
| <u>18</u> | G | 100 | 220 | 205 | 30 | 575 | 100 | <u>22.5</u> |
| <u>19</u> | <u>H</u> | 100 | 205 | 210 | <u>130</u> | 570 | 100 | <u>13.5</u> |

Note: <u>Underlines</u> indicate that the values are outside the scope of the present invention.

**Claims**

1. A heavy wall, high-strength line pipe for sour gas service, wherein a chemical composition of a steel pipe base metal portion contains, in terms of % by mass, C: 0.020 to 0.060%, Si: 0.50% or less, Mn: 0.80 to 1.50%, P: 0.008% or less, S: 0.0015% or less, Al: 0.080% or less, Nb: 0.005 to 0.050%, Ca: 0.0010 to 0.0040%, N: 0.0080% or less, O: 0.0030% or less, and the balance being Fe and unavoidable impurities, Ceq expressed by equation (1) is 0.320 or more, PHIC expressed by equation (2) is 0.960 or less, ACRM expressed by equation (3) is 1.00 to 4.00, and PCA expressed by equation (4) is 4.00 or less;

a microstructure contains 90% or more bainite in a region that extends from a position 2 mm from an inner surface to a position 2 mm from an outer surface in a pipe thickness direction;

in a hardness distribution in the pipe thickness direction, a hardness of a region other than a center segregation area is 220 Hv10 or less and a hardness of the center segregation area is 250 Hv10 or less; and

major axes of pores, inclusions, and inclusion clusters that are present in a portion that extends from a position 1 mm from the inner surface to a 3/16 position of a pipe thickness and in a portion that extends from a position 1 mm from the outer surface to a 13/16 position of the pipe thickness in the pipe thickness direction are 1.5 mm or less:

$$Ceq = C + Mn/6 + (Cu + Ni)/15 + (Cr + Mo + V)/5 \cdots \text{equation (1)}$$

$$PHIC = 4.46C + 2.37Mn/6 + (1.74Cu + 1.7Ni)/5 + (1.18Cr + 1.95Mo + 1.74V)/15 + 22.36P \cdots \text{equation (2)}$$

$$ACRM = (Ca - (1.23O - 0.000365))/(1.25S) \cdots \text{equation (3)}$$

$$PCA = 10000CaS^{0.28} \cdots \text{equation (4)}$$

where respective alloying elements in equations (1) to (4) represent their contents (% by mass) in the chemical composition.

2. The heavy wall, high-strength line pipe for sour gas service according to Claim 1, wherein the chemical composition of the steel pipe base metal portion further contains, in terms of % by mass, at least one selected from Cu: 0.50% or less, Ni: 1.00% or less, Cr: 0.50% or less, Mo: 0.50% or less, V: 0.100% or less, and Ti: 0.030% or less.

3. The heavy wall, high-strength line pipe for sour gas service according to Claim 1 or 2, wherein the pipe thickness is 20 mm or more and T/D is 0.045 or less (T representing the pipe thickness (mm) and D representing a pipe diameter (mm)).

4. A method for producing a heavy wall, high-strength line pipe for sour gas service, the method comprising reheating a continuously cast slab having the chemical composition according to Claim 1 or 2 to 1000 to 1150°C; hot-rolling the reheated slab at a total reduction ratio of 40 to 90% in an un-recrystallized temperature range; conducting accelerated cooling from a surface temperature of Ar3 - t °C or more (where t represents a plate thickness (mm)) to a temperature in the range of 350 to 550°C, in which cooling from 700 to 600°C is conducted at an average cooling rate of 120 °C/s or less in a portion that extends from a position 1 mm from a front surface to a 3/16 position of the plate thickness and in a portion that extends from a position 1 mm from a rear surface to a 13/16 position of the plate thickness in a plate thickness direction and at a cooling rate of 20 °C/s or more at a center in the plate thickness direction; conducting cold working to bend the resulting plate into a pipe; and welding butted portions of two edges to form a welded steel pipe.

5. The method for producing a heavy wall, high-strength line pipe for sour gas service according to Claim 4, wherein after the hot rolling, descaling is conducted at an injection pressure of 1 MPa or more at a steel plate surface immediately before the accelerated cooling.

6. The method for producing a heavy wall, high-strength line pipe for sour gas service according to Claim 4 or 5, wherein a pipe thickness is 20 mm or more and T/D is 0.045 or less (T representing the pipe thickness (mm) and D representing a pipe diameter (mm)).

7. A method for judging resistance to HIC of a heavy wall, high-strength line pipe for sour gas service, wherein, after a welded steel pipe is produced by the method according to any one of Claims 4 to 6, samples are cut out from a base metal of the steel pipe and ultrasonic flaw detection is conducted with a 20 MHz or higher probe in a portion that extends from a position 1 mm from an inner surface to a 3/16 position of the pipe thickness and in a portion that extends from a position 1 mm from an outer surface to a 13/16 position of the pipe thickness in a pipe thickness direction, the ultrasonic flaw detection being conducted over a region having an area of at least 200 mm$^2$ in a pipe circumferential direction and a pipe longitudinal direction to detect whether or not there is a reading value that indicates 1.5 mm or more.

**EP 2 871 252 A1**

<table>
<tr><td colspan="2"><b>INTERNATIONAL SEARCH REPORT</b></td><td>International application No.<br>PCT/JP2013/002160</td></tr>
</table>

A. CLASSIFICATION OF SUBJECT MATTER
*C22C38/00*(2006.01)i, *B21C37/08*(2006.01)i, *C21D8/02*(2006.01)i, *C22C38/12*(2006.01)i, *C22C38/50*(2006.01)i, *G01N29/04*(2006.01)i

According to International Patent Classification (IPC) or to both national classification and IPC

B. FIELDS SEARCHED

Minimum documentation searched (classification system followed by classification symbols)
C22C38/00-38/60, B21C37/08, C21D8/00-8/10, G01N29/04

Documentation searched other than minimum documentation to the extent that such documents are included in the fields searched
Jitsuyo Shinan Koho          1922-1996   Jitsuyo Shinan Toroku Koho  1996-2013
Kokai Jitsuyo Shinan Koho    1971-2013   Toroku Jitsuyo Shinan Koho  1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2009-133005 A  (JFE Steel Corp.),<br>18 June 2009 (18.06.2009),<br>examples<br>& WO 2009/061006 A1      & US 2010/0326559 A1<br>& EP 2224028 A1           & TW 200930820 A<br>& RU 2010122959 A         & KR 10-2010-0070364 A<br>& CN 101855378 A | 1-3<br>1-3 |
| Y | JP 7-136748 A  (Sumitomo Metal Industries,<br>Ltd.),<br>30 May 1995 (30.05.1995),<br>paragraph [0007]<br>(Family: none) | 1-3 |

| ☒ | Further documents are listed in the continuation of Box C. | ☐ | See patent family annex. |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>21 June, 2013 (21.06.13) | Date of mailing of the international search report<br>02 July, 2013 (02.07.13) |
|---|---|
| Name and mailing address of the ISA/<br>Japanese Patent Office | Authorized officer |
| Facsimile No. | Telephone No. |

Form PCT/ISA/210 (second sheet) (July 2009)

18

**INTERNATIONAL SEARCH REPORT**

International application No.

PCT/JP2013/002160

C (Continuation).　DOCUMENTS CONSIDERED TO BE RELEVANT

| Category* | Citation of document, with indication, where appropriate, of the relevant passages | Relevant to claim No. |
|---|---|---|
| Y | JP 2012-46789 A (Nippon Steel Corp.), 08 March 2012 (08.03.2012), paragraph [0046] (Family: none) | 1-3 |
| A | JP 2011-132600 A (JFE Steel Corp.), 07 July 2011 (07.07.2011), claims & WO 2011/065582 A1　　& US 2013/0000793 A1 & EP 2505683 A1　　　& KR 10-2012-0084804 A & CN 102639734 A | 1-7 |
| A | JP 2012-77331 A (JFE Steel Corp.), 19 April 2012 (19.04.2012), paragraphs [0041] to [0044] (Family: none) | 5 |
| A | US 2012/0121453 A1 (SUMITOMO METAL INDUSTRIES, LTD.), 17 May 2012 (17.05.2012), example 1 & WO 2010/104165 A1　　& US 2012/0121453 A1 & EP 2407570 A1　　　& CA 2755271 A & KR 10-2011-0123807 A　& CN 102421926 A | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009221534 A
- JP 2010077492 A
- JP 2009133005 A
- JP 6220577 A
- JP 2003013175 A
- JP 2010209461 A
- JP 2011063840 A
- JP 2010209460 A
- JP 2006063351 A
- JP 2011001607 A
- JP 2010189722 A
- JP 10008196 A
- JP 2009120899 A
- JP 2010189720 A
- JP 9324216 A
- JP 9324217 A
- JP 2003226922 A
- JP 2004003014 A
- JP 2004003015 A
- JP 2005060820 A
- JP 2005060837 A
- JP 2008056962 A
- JP 2008101242 A
- JP 2009052137 A
- JP 2000160245 A